# EUROPEAN PATENT SPECIFICATION

(11) **EP 4 415 348 B1**
(45) Date of publication and mention of the grant of the patent: **11.11.2026**
(21) Application number: 22892989.9
(22) Date of filing: 25.08.2022
(51) Int. Cl.: H04N 7/14, H04N 19/177, H04N 19/159, H04N 19/895, H04N 21/6437, H04N 21/647, H04L 65/1016, H04L 65/1104, H04L 65/80, H04L 65/65

(54) **ELECTRONIC DEVICE FOR DETERMINING GOP INTERVAL ON BASIS OF PERFORMANCE INFORMATION ABOUT EXTERNAL ELECTRONIC DEVICE AND OPERATION METHOD FOR ELECTRONIC DEVICE**
ELEKTRONISCHE VORRICHTUNG ZUR BESTIMMUNG DES GOP-INTERVALLS AUF BASIS VON LEISTUNGSINFORMATIONEN ÜBER EINE EXTERNE ELEKTRONISCHE VORRICHTUNG UND BETRIEBSVERFAHREN FÜR DIE ELEKTRONISCHE VORRICHTUNG
DISPOSITIF ÉLECTRONIQUE POUR DÉTERMINER UN INTERVALLE DE GOP SUR LA BASE D'INFORMATIONS DE PERFORMANCE CONCERNANT UN DISPOSITIF ÉLECTRONIQUE EXTERNE ET PROCÉDÉ D'EXPLOITATION POUR DISPOSITIF ÉLECTRONIQUE

(30) Priority: 10.11.2021 KR 20210153996
(43) Date of publication of application: 14.08.2024
(73) Proprietor: Samsung Electronics Co., Ltd., Suwon-si, Gyeonggi-do 16677 (KR)
(72) Inventor: DO, Taewon, Suwon-si, Gyeonggi-do 16677 (KR); KIM, Yongtae, Suwon-si, Gyeonggi-do 16677 (KR); LEE, Hoonjae, Suwon-si, Gyeonggi-do 16677 (KR); JUN, Hyeyoung, Suwon-si, Gyeonggi-do 16677 (KR)
(74) Representative: Gulde & Partner
(86) International application number: PCT/KR2022/012715
(87) International publication number: WO 2023/085566

(56) References cited:
- KR-A- 20170 094 554
- KR-A- 20200 005 124
- US-A1- 2013 010 858
- US-A1- 2018 063 548
- US-A1- 2020 374 536
- US-A1- 2021 083 807
- US-B2- 10 491 651
- WENGER U CHANDRA NOKIA M WESTERLUND B BURMAN ERICSSON S: "Codec Control Messages in the RTP Audio-Visual Profile with Feedback (AVPF); rfc5104.txt", CODEC CONTROL MESSAGES IN THE RTP AUDIO-VISUAL PROFILE WITH FEEDBACK (AVPF)?; RFC5104.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 February 2008 (2008-02-01), XP015055174

## Description

### [Technical Field]

Various embodiments of the disclosure relate to an electronic device and an operation method of the electronic device, and to a technology for determining a GOP interval based on performance information of an external electronic device.

### [Background Art]

Various electronic devices such as a smartphone, a tablet PC, a portable multimedia player (PMP), a personal digital assistant (PDA), a laptop personal computer (PC), and a wearable device are becoming widespread.

Recent electronic devices may provide a video call based on an IP multimedia subsystem (IMS) or rich communication suite (RCS). A video call may refer to a call in a manner in which voice and video transmitted by the other party of a video call are received in real time. An electronic device may support audio-visual profile with feedback (AVPF) to improve the quality of a video call. The AVPF may support a generic non-acknowledgement (NACK) technology capable of performing retransmission of a packet in which loss has occurred, and a packet loss indication (PLI) technology capable of performing retransmission of an intra frame. The electronic device may perform a high-quality video call by retransmitting a frame or a packet in which an error has occurred, through various retransmission technologies defined in various standards (e.g., RFC) as well as AVPF.

US 2018/0063548 A1 describes video telephony (VT) call management techniques. The techniques enable a device to cache intra-frame data at a pre-decoder-initialization stage. An example device includes a memory configured to store video data associated with a VT call, a video decoder configured to render a portion of the stored video data; and one or more processors. The processor(s) are configured to determine whether the received video frame data comprises i-frame data, to determine whether the video decoder is in a pre-initialized state or an initialized state, and when the received video frame data comprises the i-frame data and the video decoder is in the pre-initialized state, to store the i-frame data to the memory.

RFC 5104 is directed to "Codec Control Messages in the RTP Audio-Visual Profile with Feedback (AVPF)" and specifies a few extensions to the messages defined in the Audio-Visual Profile with Feedback (AVPF). They are helpful primarily in conversational multimedia scenarios where centralized multipoint functionalities are in use. However, some are also usable in smaller multicast environments and point-to-point calls. The extensions discussed are messages related to the ITU-T Rec. H.271 Video Back Channel, Full Tetra Request, Temporary Maximum Media Stream Bit Rate, and Temporal-Spatial Trade-off.

US 2013/0010858 A1 discloses a method where a GOP size is changed to Small when an encoding rate is higher than a reference rate, and the GOP size is changed to Large when the encoding rate is equal to or lower than the reference rate. The reason is that the GOP size is changed to Small since resistance to errors decreases as the encoding rate increases and the GOP size is changed to Large since resistance to errors increases as the encoding rate decreases. By determining the GOP size on the basis of error resistance in order to reduce the error rate of video transmission with respect to propagation changes, it is possible to improve the video reception quality.

### [Disclosure of Invention]

### [Technical Problem]

However, an electronic device implemented to support AVPF may not be able to use AVPF due to the policy of some operators. In a state where AVPF cannot be used, the electronic device may configure an interval of a group of pictures (GOP) to be relatively small, and perform a video call. The GOP may mean at least one intra frame and a set of multiple inter frames which may be decoded with reference to the intra frame. An intra frame may be a frame having a size larger than that of an inter frame. When the electronic device performs a video call by using a GOP having a relatively small interval, the electronic device may receive an intra frame at a relatively small interval. In this case, a problem may occur in which the possibility of loss of a packet including at least a part of a GOP or an intra frame may increase, and a compression rate of the GOP may decrease since the number of inter frames included in the GOP is relatively small.

### [Solution to Problem]

The invention is defined by the appended claims. The description that follows is subjected to this limitation. Any disclosure lying outside the scope of said claims is only intended for illustrative as well as comparative purposes. An electronic device according to various embodiments of the disclosure may include: a communication circuit configured to perform a video call with an external electronic device; and a processor, wherein the processor is configured to: receive, from the external electronic device, a message including performance information of the external electronic device; identify, based on the performance information of the external electronic device, whether the external electronic device supports a first retransmission function for retransmitting an intra frame corresponding to a frame having failed to be transmitted among frames included in a group of pictures (GOP), and/or a second retransmission function for retransmitting a packet to be transmitted through the video call; and determine an interval of the GOP, based on a result of the identification. In particular, the processor configures the interval of the GOP differently, depending on whether the external electronic device supports the first retransmission function and/or the second retransmission function.

According to an embodiment, the message is a message included in a source description (SDES) packet of a real-time transport control protocol (RTCP), an application (APP) packet of the RTCP, and/or a real-time protocol (RTP) packet.

According to an embodiment, in the packet, a first indicator indicating whether the first retransmission function is supported and/or a second indicator indicating whether the second retransmission function is supported are configured in a canonical name (CNAME) of the packet.

According to the claimed invention, the processor is configured to: set the interval as a first value in case that the external electronic device does not support both the first retransmission function and the second retransmission function; and configure the interval as a second value greater than the first value in case that the external electronic device supports at least one of the first retransmission function and/or the second retransmission function.

According to an embodiment, the processor is configured to configure the interval as a third value greater than the second value in case that the external electronic device supports both the first retransmission function and the second retransmission function.

According to an embodiment, the processor is configured to receive the message from the external electronic device as a part of a negotiation process for a video call which does not support AVPF.

According to an embodiment, the processor is configured to: receive the message during the video call; and change the interval of the GOP, based on the result of the identification.

According to an embodiment, the processor is configured to, as a part of the changing of the interval of the GOP, reconfigure an encoder configured to encode at least one frame included in the GOP.

According to an embodiment, the processor is configured to determine whether to activate the first retransmission function and/or the second retransmission function, based on the result of the identification.

According to an embodiment, the first retransmission function is one of a packet loss indicator (PLI) function and a fast intra refresh (FIR) function defined in AVPF, and the second retransmission function is a generic NACK function defined in the AVPF.

An operation method of an electronic device according to various embodiments of the disclosure may include: receiving, from an external electronic device which is to perform a video call with the electronic device, a message including performance information of the external electronic device; identifying, based on the performance information of the external electronic device, whether the external electronic device supports a first retransmission function for retransmitting an intra frame corresponding to a frame having failed to be transmitted among frames included in a group of pictures (GOP), and/or a second retransmission function for retransmitting a packet to be transmitted through the video call; and determining an interval of the GOP, based on a result of the identification. In particular, the interval of the GOP is configured differently, depending on whether the external electronic device supports the first retransmission function and/or the second retransmission function.

According to an embodiment, the message is a message included in a source description (SDES) packet of a real-time transport control protocol (RTCP), an application (APP) packet of the RTCP, and/or a real-time protocol (RTP) packet.

According to an embodiment, in the packet, a first indicator indicating whether the first retransmission function is supported and/or a second indicator indicating whether the second retransmission function is supported are configured in a canonical name (CNAME) of the packet.

According to the claimed invention, the determining of the interval of the GOP comprises: setting the interval as a first value in case that the external electronic device does not support both the first retransmission function and the second retransmission function; or configuring the interval as a second value greater than the first value in case that the external electronic device supports at least one of the first retransmission function and/or the second retransmission function.

According to an embodiment, the determining of the interval of the GOP further comprises configuring the interval as a third value greater than the second value in case that the external electronic device supports both the first retransmission function and the second retransmission function.

### [Advantageous Effects of Invention]

An electronic device and an operation method of the electronic device according to various embodiments of the disclosure may identify, based on performance information of an external electronic device participating in a video call, whether the external electronic device can support at least one retransmission function defined in AVPF. The electronic device may determine (or change) a GOP interval, based on a result of the identification. The electronic device may increase the GOP interval in a state where the retransmission function is activated, compared to the GOP interval in a state where the retransmission function is deactivated. Therefore, the electronic device and the operation method of the electronic device may increase an interval of a GOP to include a relatively high quality intra frame and a frame (e.g., an inter frame or a bidirectional predicted frame) decoded with reference to the intra frame, and thus increase the maximum size allocated to each frame included in the GOP, thereby providing a high quality video call.

### [Brief Description of Drawings]

FIG. 1 is a block diagram of an electronic device according to various embodiments of the disclosure;
FIG. 2 is a block diagram of a program according to various embodiments;
FIG. 3 illustrates an embodiment in which an electronic device and an external electronic device perform a configuration for performing a video call, according to various embodiments of the disclosure;
FIG. 4 is a block diagram of an electronic device according to various embodiments of the disclosure;
FIG. 5 illustrates an embodiment in which an electronic device according to various embodiments of the disclosure configures an interval of a group of pictures (GOP);
FIG. 6 is an operational flowchart illustrating an operation method of an electronic device according to various embodiments of the disclosure;
FIG. 7 illustrates an embodiment in which an electronic device according to various embodiments of the disclosure determines an interval of a GOP, based on whether an external electronic device supports a first retransmission function and/or a second retransmission function; and
FIG. 8 illustrates an illustrative example not covered by the claimed invention, in which an electronic device determines an interval of a GOP, based on performance information of an external electronic device.

### [Mode for the Invention]

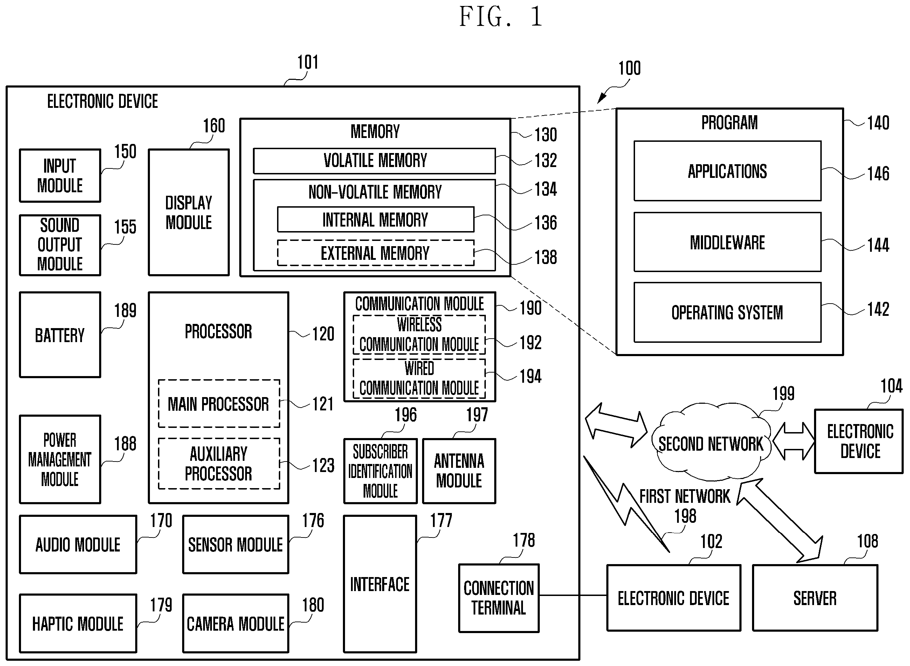

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

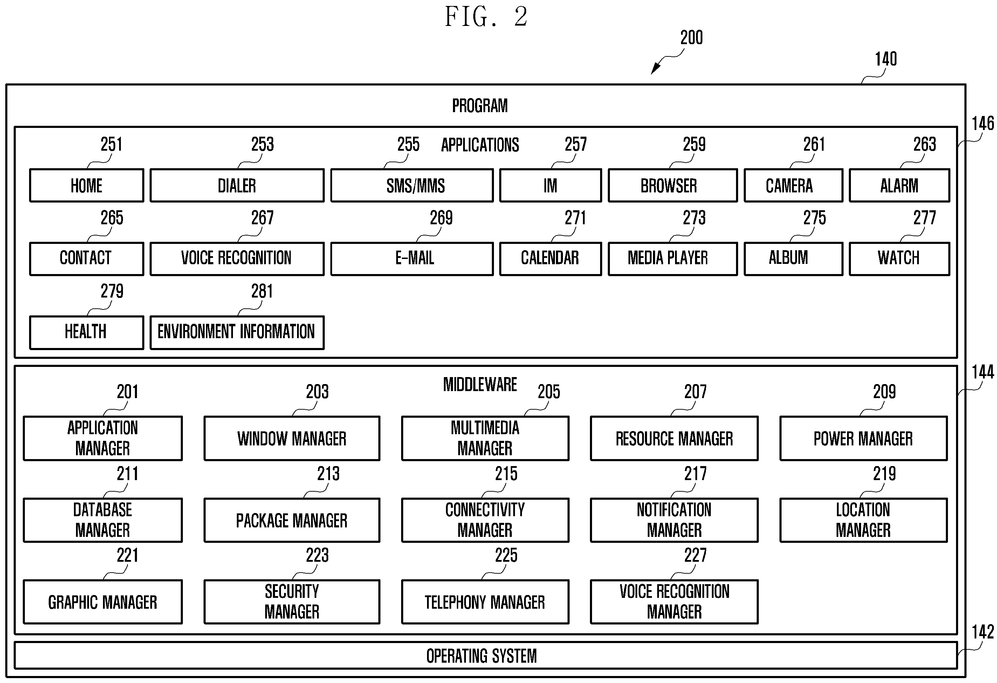

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM, iOSTM, WindowsTM, SymbianTM, TizenTM, or BadaTM. At least part of the program 140, for example, may be preloaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

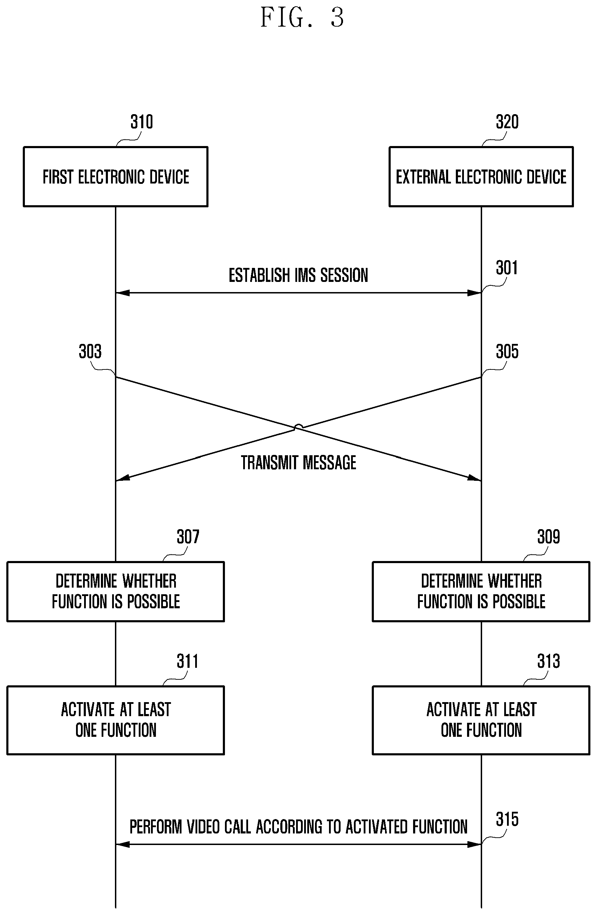

FIG. 3 illustrates an embodiment in which an electronic device and an external electronic device perform a configuration for performing a video call, according to various embodiments of the disclosure.

An electronic device (e.g., the electronic device 101 of FIG. 1) 310 and an external electronic device (e.g., the electronic device 104 of FIG. 1) 320 may establish an IP multimedia subsystem (IMS) session in operation 301.

The IMS session may refer to a session used by the electronic device 310 and the external electronic device 320 to transmit or receive data. The data exchanged through an IMS session may include data (image data and audio data) exchanged while performing a video call. The electronic device 310 and the external electronic device 320 may perform a negotiation procedure, based on a session initiation protocol (SIP) for an IMS-based multimedia service (e.g., a video call and/or a voice call), and establish a session according to the negotiation procedure.

The electronic device 310 may perform a negotiation procedure for establishing a session (e.g., an IMS session) for a media service (e.g., a video call and/or a voice call service) with the external electronic device 320, based on a session initiation protocol (SIP) (or a session description protocol (SDP)).

When the electronic device 310 operates as a calling terminal for a media service (e.g., a video call), the electronic device 310 may perform a negotiation procedure with the external electronic device 320 through transmission of an SIP INVITE message, reception of an SIP 100 trying message, reception of an SIP 180 Ringing message, reception of an SIP 200 OK message, and/or transmission of an SIP ACK message.

When the electronic device 310 operates as a receiving terminal for a media service (e.g., a video call), the electronic device 310 may perform a negotiation procedure with the external electronic device 320 through reception of an SIP INVITE message, transmission of an SIP 100 trying message, transmission of an SIP 180 Ringing message, transmission of an SIP 200 OK message, and reception of an SIP ACK message.

According to an embodiment, the electronic device 310 may perform negotiation with the external electronic device 320 in one state among an audio-visual profile with feedback (AVPF) off state, which is a state in which AVPF is not activated, or an AVPF On state, which is a state in which AVPF is activated. The electronic device 310 may negotiate with the external electronic device 320 whether to activate at least some of various functions supported by AVPF, and determine whether to activate at least some of the functions. Various functions supported by the AVPF may include at least one function related to improvement of the quality of a video call. A function for quality improvement defined in the AVPF (hereinafter, referred to as a "quality improvement function" or "QoS technology") may include a first retransmission function for performing retransmission of an intra frame and/or a second retransmission function for performing retransmission of a packet having failed to be transmitted among multiple packets constituting a frame.

The first retransmission function refers to a function for retransmitting a frame having failed to be transmitted among a group of pictures (GOP) including at least one intra frame and multiple inter frames (e.g., a P frame and/or a B frame) generated with reference to the intra frame. The first retransmission function may refer to one function among picture loss indication (PLI) or fast intra refresh (FIR). The electronic device 310 may generate (or encode) an intra frame corresponding to a frame having failed to be transmitted or a frame to be transmitted after the frame having failed to be transmitted, and retransmit the converted frame.

The second retransmission function refers to a function for retransmitting a packet having failed to be received among multiple packets constituting an intra frame and/or another frame (e.g., a P frame). The second retransmission function may refer to generic non-acknowledgement (NACK).

In operation 303, the electronic device 310 may transmit a message in the form of an RTCP packet (e.g., media data) to the external electronic device 320.

The message may be transmitted or received by being included in a session description protocol security description (SDES) packet or an application (APP) packet among RTCP packets. The message transmitted by the electronic device 310 may include performance information of the electronic device 310. The performance information of the electronic device 310 may include performance information related to whether a function for improving the quality of a video call can be supported. The message may include a specific field (e.g., a CNAME field) including an indicator indicating whether the function for quality improvement can be supported. The indicator may be implemented based on a string, and the external electronic device 320 which has received a packet may identify whether the electronic device 310 can support a specific function, through parsing of the message.

In operation 305, the external electronic device 320 may transmit a message in the form of an RTCP packet (e.g., media data) to the electronic device 310.

The message may be transmitted or received by being included in a session description protocol security description (SDES) packet or an application (APP) packet among RTCP packets. The message transmitted by the external electronic device 320 may include performance information of the external electronic device 320. The performance information of the external electronic device 320 may include performance information related to whether a function for improving the quality of a video call can be supported. The message may include a specific field (e.g., a CNAME field) including an indicator indicating whether the function for quality improvement can be supported. The indicator may be implemented based on a string, and the electronic device 310 which has received a packet may identify whether the external electronic device 320 can support a specific function, through parsing of the message.

In the example of FIG. 3, a transmission and reception operation of an RTCP packet (e.g., a message) including a message is shown as one-time signaling, but this is shown for convenience of description, and an RTCP packet may be continuously transmitted or received while a video call is performed. In various embodiments, the electronic device 310 and/or the external electronic device 320 may determine whether a service (e.g., a video call) according to a quality improvement function is available by using an RTCP packet which is initially transmitted or received. In various embodiments, operations 303 and 305 may be performed first by one electronic device, or may be performed simultaneously by the respective electronic devices.

In operation 307, the electronic device 310 may determine whether to perform the quality improvement function, based on the performance information of the external electronic device 320 included in the message transmitted by the external electronic device 320.

For example, the electronic device 310 may determine whether the external electronic device 320 can support the quality improvement function. The quality improvement function may be activated when both the electronic device 310 and the external electronic device 320 support the quality improvement function.

The electronic device 310 may identify an indicator included in a specific field (e.g., CNAME) of a message of an RTCP packet by parsing the message, and may identify whether the external electronic device 320 supports a specific function, based on the indicator. The electronic device 310 may determine to activate the specific function, based on the identification that the external electronic device 320 supports the specific function.

In operation 309, the external electronic device 320 may determine whether to perform the quality improvement function, based on the performance information of the electronic device 310 included in the message transmitted by the electronic device 310.

For example, the external electronic device 320 may determine whether the electronic device 310 can support the quality improvement function. The quality improvement function may be activated when both the electronic device 310 and the external electronic device 320 support the quality improvement function.

The external electronic device 320 may identify an indicator included in a specific field (e.g., CNAME) of a message of an RTCP packet by parsing the message, and may identify whether the electronic device 310 supports a specific function, based on the indicator. The external electronic device 320 may determine to activate the specific function, based on the identification that the electronic device 310 supports the specific function.

In operation 311, the electronic device 310 may activate at least one function. At least one function which is activated may be a function which can be supported by both the electronic device 310 and the external electronic device 320.

In operation 313, the external electronic device 320 may activate at least one function. At least one function which is activated may be a function which can be supported by both the electronic device 310 and the external electronic device 320.

In operation 315, the electronic device 310 and the external electronic device 320 may perform a video call according to the activated function.

The electronic device 310 and the external electronic device 320 may perform a video call in a state where the first retransmission function and/or the second retransmission function is activated.

When the first retransmission function is activated, the electronic device 310 and the external electronic device 320 can improve the quality of a video call by generating (or encoding), in response to receiving a signal for requesting retransmission of a frame having failed to be received, an intra frame corresponding to the frame having failed to be received, and retransmitting the generated (or encoded) intra frame.

When the second retransmission function is activated, the electronic device 310 and the external electronic device 320 can improve the quality of a video call by retransmitting, in response to receiving a signal for requesting retransmission of a packet having failed to be received, the packet having failed to be received.

The electronic device 310 and the external electronic device 320 can improve the quality of a video call by retransmitting a packet having failed to be transmitted (or having an error occurred therein) among packets transmitted through the video call.

The electronic device 310 may transmit multiple frames during a video call. According to an embodiment, the multiple frames may refer to an image obtained by using a camera module (e.g., the camera module 180 of FIG. 1) of the electronic device 310 or an image temporarily or non-temporarily stored in a memory (e.g., the memory 130 of FIG. 1) of the electronic device 310. The electronic device 310 may preprocess an image to be transmitted by using various filters (e.g., a low-pass filter and an AI-based filter), and control an encoder (not shown) to encode the preprocessed image. The encoder may be a codec (e.g., H.265, H.264, VP9, VP8, or AV1) which supports various encoding schemes. The electronic device 310 may generate a group of pictures (GOP) including an intra frame, which is a frame which can be decoded by itself without referring to other frames, a forward predicted frame (hereinafter, referred to as a P frame), which is a frame which can be decoded by referring to other previous frames, and/or a bidirectional predicted frame (hereinafter, referred to as a B frame), which is a frame which can be decoded by referring to other previous frames and subsequent frames. The P frame and/or the B frame may have a higher compression rate than an intra frame. The GOP may include one intra frame and multiple P frames or B frames.

The GOP may be transmitted at an interval defined in the unit of a time. For example, when a frame transmitted by the electronic device 310 is 5 frames per sec (fps), a GOP transmitted at an interval of 2 seconds may include one intra frame and 9 P frames. For another example, when a frame transmitted by the electronic device 310 is 5 frames per sec (fps), a GOP transmitted at an interval of 4 seconds may include one intra frame and 19 P frames. For another example, when a frame transmitted by the electronic device 310 is 5 fps, a GOP transmitted at an interval of 10 seconds may include one intra frame and 49 P frames. As an interval of a GOP increases, a compression rate of a video transmitted by the electronic device 310 may be improved. The electronic device 310 and the external electronic device 320 may receive an intra frame relatively frequently as the interval of the GOP decreases, thereby improving the quality of a video.

When performing a video call in a situation where AVPF is not supported, the electronic device 310 and/or the external electronic device 320 may perform a video call by transmitting a GOP having a specified interval. An interval configured by an operator may be very small (e.g., 2 seconds) in order to satisfy the required quality of a video call.

In a situation where AVPF is not supported but execution of a specific function (e.g., the first retransmission function and/or second retransmission function) capable of providing improved quality is allowed, the electronic device 310 and/or the external electronic device 320 is allowed to transmit a GOP having a large interval, but may transmit a GOP having a small interval to reduce the size of data allocated to an intra frame. As the size of data allocated to an intra frame decreases, the image quality of the intra frame may decrease, and the image quality of an inter frame decoded with reference to the intra frame may also decrease. Due to the above problem, shaking of a displayed screen may occur at every configured interval. Assuming a situation where a highly complex video is transmitted and/or received, an intra frame may be assigned a size lower than the size of data to be assigned to the intra frame, and thus the video quality may deteriorate.

Hereinafter, an embodiment of determining or changing a GOP based on a function which can be supported by the other party performing a video call will be described.

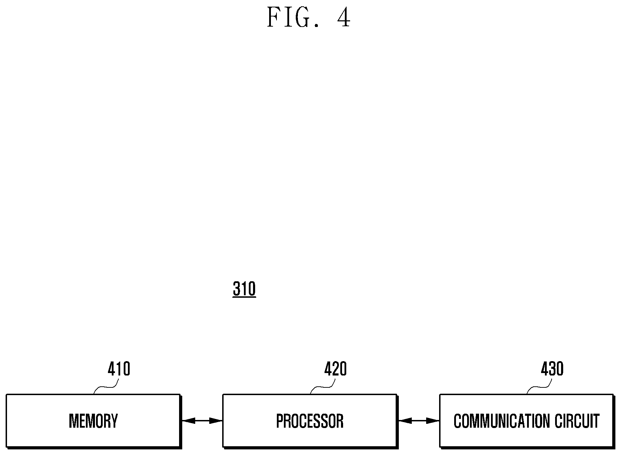

FIG. 4 is a block diagram of an electronic device according to various embodiments of the disclosure.

Referring to FIG. 4, an electronic device (e.g., the electronic device 310 of FIG. 3) according to various embodiments of the disclosure may include a memory (e.g., the memory 130 of FIG. 1) 410, a processor (e.g., the processor 120 of FIG. 1) 420, and/or a communication circuit (e.g., the communication module 190 of FIG. 1) 430.

The memory 410 may temporarily and/or non-temporarily store an image obtained through various schemes. The image may be obtained through a camera (e.g., the camera module 180 of FIG. 1), or may be obtained by being received from another external electronic device. The memory 410 may store various codecs for encoding an obtained image. A codec may be a software and/or hardware component which generates an image stream to be transmitted to a server (e.g., a server 350 of FIG. 3) by encoding an obtained image.

The processor 420 may generate a GOP including one intra frame and/or inter frame (e.g., a P frame or a B frame) by loading a codec stored in the memory 410 and then encoding the image stored in the memory 410.

The processor 420 may control the communication circuit 430 to establish a communication connection with an external electronic device (e.g., the external electronic device 320 of FIG. 3). The processor 420 may control the communication circuit 430 to transmit various data to the external electronic device 320 through an established channel. The processor 420 may control the communication circuit 430 to transmit the generated GOP to the external electronic device 320.

In order to perform a video call, the processor 420 may control the communication circuit 430 to transmit a request message for requesting a video call to the external electronic device 320. The request message may be implemented in an SDP invite message format defined in a session description protocol (SDP). The request message may include performance information of the electronic device 310. The performance information of the electronic device 310 may be included in a message body field of an SDP invite message.

The performance information of the electronic device 310 may include information indicating a function which can be supported by the electronic device 310 among various functions defined in AVPF. Various functions supported by the AVPF may include at least one function related to improvement of the quality of a video call. A function for quality improvement defined in the AVPF (hereinafter, referred to as a "quality improvement function" or "QoS technology") may include a first retransmission function for performing retransmission of an intra frame and/or a second retransmission function for performing retransmission of a packet.

The first retransmission function refers to a function for retransmitting a frame having failed to be transmitted among a group of pictures (GOP) including at least one intra frame and multiple inter frames (e.g., a P frame and/or a B frame) generated with reference to the intra frame. The electronic device 310 may generate (or encode) an intra frame corresponding to a frame having failed to be transmitted, and retransmit the converted frame. The first retransmission function may refer to one function among picture loss indication (PLI) or fast intra refresh (FIR).

The second retransmission function refers to a function for retransmitting a packet having failed to be received among multiple packets constituting an intra frame and/or another frame (e.g., a P frame). The second retransmission function may refer to generic non-acknowledgement (NACK).

When the first retransmission function is activated, the electronic device 310 and the external electronic device 320 can improve the quality of a video call by generating (or encoding), in response to receiving a signal for requesting retransmission of an intra frame, an intra frame corresponding to a frame having failed to be received, and retransmitting the generated (or encoded) intra frame.

When the second retransmission function is activated, the electronic device 310 and the external electronic device 320 can improve the quality of a video call by retransmitting a packet in response to receiving a signal for requesting retransmission of the packet.

The electronic device 310 and the external electronic device 320 can improve the quality of a video call by retransmitting a frame in which an error has occurred (or a frame in which loss has occurred) among frames transmitted through a video call or a packet constituting a frame in which an error has occurred.

The processor 420 may transmit the performance information of the electronic device 310 even during a video call. The processor 420 may add the performance information of the electronic device 310 to a specific field (e.g., an extension field) in a header portion of a real time protocol (RTP) packet including a GOP to be transmitted to the external electronic device 320 during a video call, and add performance information of the electronic device 310 to a specific field (e.g., CNAME) in a header portion of a real-time transport control protocol (RTCP) packet including control information to be transmitted to the external electronic device 320 during a video call. The specific field may include a first indicator indicating whether the first retransmission function is supported, and/or a second indicator indicating whether the second retransmission function is supported.

The processor 420 receives performance information of the external electronic device 320 participating in a video call. When the processor 420 receives the performance information of the external electronic device 320 in a process of performing negotiation for a video call, the performance information of the external electronic device 320 may be included in a response message (e.g., 200 OK) corresponding to an SDP invite message. The performance information of the external electronic device 320 may be included in a message body field of the response message.

The processor 420 may receive the performance information of the external electronic device 320 even during a video call. The processor 420 may identify the performance information of the external electronic device 320 by parsing a specific field (e.g., an extension field) in a header portion of a real time protocol (RTP) packet transmitted by the external electronic device 320 during a video call.

The performance information of the external electronic device 320 may be transmitted or received by being included in a session description protocol security description (SDES) packet or an application (APP) packet among RTCP packets. A message transmitted by the external electronic device 320 may include the performance information of the external electronic device 320.

The processor 420 may identify the performance information of the external electronic device 320 by parsing a specific field (e.g., CNAME) in a header portion of a real-time transport control protocol (RTCP) packet including control information transmitted by the external electronic device 320 during a video call.

The performance information of the external electronic device 320 may include information indicating a function which can be supported by the external electronic device 320 among various functions defined in AVPF. Various functions supported by the AVPF may include at least one function related to improvement of the quality of a video call. A function for quality improvement defined in the AVPF may include a first retransmission function for performing retransmission of an intra frame and/or a second retransmission function for performing retransmission of a packet. A message including the performance information of the external electronic device 320 may include a specific field (e.g., a CNAME field) including an indicator indicating whether the function for quality improvement can be supported. The indicator may be implemented based on a string, and the processor 420 which has received a packet may identify whether the external electronic device 320 can support a specific function (e.g., the first retransmission function and/or second retransmission function), through parsing of the message.

The processor 420 may activate a specific function supported by the external electronic device 320 among specific functions supported by the electronic device 310, and perform a video call with the external electronic device 320 through the activated specific function.

According to an embodiment, the processor 420 identifies whether the external electronic device 320 supports the first retransmission function and/or the second retransmission function, based on the performance information of the external electronic device 320, which is transmitted by the external electronic device 320.

The processor 420 may identify the first indicator indicating whether the first retransmission function is supported, and/or the second indicator indicating whether the second retransmission function is supported, the indicators being included in a specific field (e.g., CNAME) of a message transmitted by the external electronic device 320, and identify whether the external electronic device 320 supports the first retransmission function and/or the second retransmission function.

The processor 420 may determine an interval of a GOP, based on a result of the identification. The processor 420 may configure the GOP interval differently depending on whether the external electronic device 320 supports the first retransmission function and/or the second retransmission function.

The processor 420 configures the interval of the GOP as a first value, in response to identifying that the external electronic device 320 does not support both the first retransmission function and the second retransmission function (or, in response to the electronic device 310 performing a video call in a state in which both the first retransmission function and/or the second retransmission function are deactivated). When the external electronic device 320 does not support the first retransmission function and the second retransmission function, the quality of a video may be relatively reduced, and thus the quality of a video may be improved by configuring the interval of the GOP to be relatively small.

The processor 420 configures the interval of the GOP as a second value larger than the first value, in response to the external electronic device 320 supporting one of the first retransmission function and/or the second retransmission function (or, in response to the electronic device 310 activating one of the first retransmission function and/or the second retransmission function). When the external electronic device 320 supports one of the first retransmission function and the second retransmission function, the quality of a video may be relatively improved compared to a case where both the first retransmission function and the second retransmission function are not supported, and thus the GOP interval may be configured to be relatively large to increase the size of data which may be allocated to an intra frame included in the GOP, thereby improving the quality of a video.

The processor 420 may configure the interval of the GOP as a third value, in response to the external electronic device 320 supporting both the first retransmission function and/or the second retransmission function. According to an embodiment, the third value may be a value greater than the second value, or may be the same value as the second value. When the external electronic device 320 supports both the first retransmission function and the second retransmission function, the quality of a video may be relatively improved compared to a case where both the first retransmission function and the second retransmission function are not supported or a case where one of the first retransmission function and the second retransmission function is supported, and thus the GOP interval may be configured to be relatively larger to increase the size of data which may be allocated to an intra frame included in the GOP, thereby improving the quality of a video.

The processor 420 configures an encoder by using the determined GOP interval, and controls the encoder to encode input images based on the determined GOP interval.

The above-described embodiment may be performed before the electronic device 310 and the external electronic device 320 perform a video call, but may be performed even while the electronic device 310 and the external electronic device 320 perform a video call.

The processor 420 may identify the performance information of the external electronic device 320 by parsing a specific field included in a message (e.g., an RTCP packet or an RTP packet) received from the external electronic device 320 during a video call. The processor 420 identifies whether the external electronic device 320 supports the first retransmission function and/or the second retransmission function, based on the performance information of the external electronic device 320.

The processor 420 may change the interval of the GOP, based on a result of the identification. The processor 420 configures the GOP interval differently depending on whether the external electronic device 320 supports the first retransmission function and/or the second retransmission function.

The processor 420 changes the interval of the GOP to the first value, in response to identifying that the external electronic device 320 does not support both the first retransmission function and the second retransmission function (or, in response to the electronic device 310 performing a video call in a state in which both the first retransmission function and/or the second retransmission function are deactivated). When the external electronic device 320 does not support the first retransmission function and the second retransmission function, the quality of a video may be relatively reduced, and thus the quality of a video may be improved by configuring the interval of the GOP to be relatively small.

The processor 420 changes the interval of the GOP to the second value larger than the first value, in response to the external electronic device 320 supporting one of the first retransmission function and/or the second retransmission function (or, in response to the electronic device 310 activating one of the first retransmission function and/or the second retransmission function). When the external electronic device 320 supports one of the first retransmission function and the second retransmission function, the quality of a video may be relatively improved compared to a case where both the first retransmission function and the second retransmission function are not supported, and thus the size of data which may be allocated to an intra frame included in the GOP may be increased to improve the quality of a video. The processor 420 may change the interval of the GOP to the third value, in response to the external electronic device 320 supporting both the first retransmission function and/or the second retransmission function. According to an embodiment, the third value may be a value greater than the second value, or may be the same value as the second value. When the external electronic device 320 supports both the first retransmission function and the second retransmission function, the quality of a video may be relatively improved compared to a case where both the first retransmission function and the second retransmission function are not supported or a case where one of the first retransmission function and the second retransmission function is supported, and thus the GOP interval may be configured to be relatively larger to increase the size of data which may be allocated to an intra frame included in the GOP, thereby improving the quality of a video.

The processor 420 may configure the interval of the GOP differently depending on the type of retransmission function supported by the external electronic device 320 among the first retransmission function and/or the second retransmission function. For example, when the external electronic device 320 supports the first retransmission function, the processor 420 may change the interval of the GOP to a fourth value greater than the first value. For another example, when the external electronic device 320 supports the second retransmission function, the processor 420 may change the interval of the GOP to a fifth value greater than the first value.

The processor 420 reconfigures the encoder by using the changed GOP interval, and control the encoder to encode input images based on the determined GOP interval. The reconfiguring of the encoder may refer to switching of an activated encoder to a deactivated state by using the GOP interval before the change, and then switching the encoder back to an activated state to encode an image according to the changed GOP interval.

The above-described embodiment may be applied in an embodiment in which the electronic device 310 and the external electronic device 320 perform a video call which does not support AVPF, but may also be applied in an embodiment in which the electronic device 310 and the external electronic device 320 perform a video call which supports AVPF.

The processor 420 may control the communication circuit 430 to transmit information indicating the determined (or changed) GOP interval to the external electronic device 320. The external electronic device 320 may configure the GOP interval, based on the information indicating the determined GOP interval.

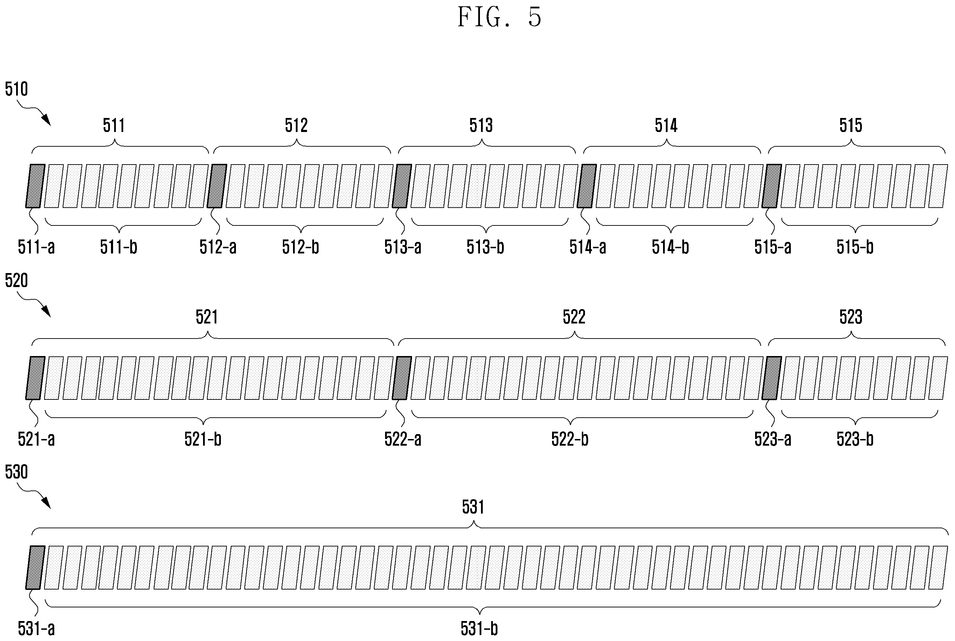

FIG. 5 illustrates an embodiment in which an electronic device according to various embodiments of the disclosure configures an interval of a group of pictures (GOP).

FIG. 5 illustrates a GOP 510 having a GOP interval having a first value, a GOP 520 having a GOP interval having a second value, and/or a GOP 530 having a GOP interval having a third value.

The GOPs 510, 520, and 530 illustrated in FIG. 5 are described assuming that each of the GOPs has 5 frames per second (fps).

A GOP 511, 512, 513, 514, or 515 having an interval having a first value may include one intra frame 511-a, 512-a, 513-a, 514-a, or 515-a and multiple inter frames 511-b, 512-b, 513-b, 514-b, or 515-b. For example, when the first value is 2 seconds, one GOP 511, 512, 513, 514, or 515 may include one intra frame 511-a, 512-a, 513-a, 514-a, or 515-a and 9 inter frames 511-b, 512-b, 513-b, 514-b, or 515-b.

A GOP 521 or 522 having an interval having a second value may include one intra frame 521-a or 522-a and multiple inter frames 521-b or 522-b. For example, when the second value is 4 seconds, one GOP 521 or 522 may include one intra frame 521-a or 522-a and 19 inter frames 521-b or 522-b.

A GOP 531 having an interval having a third value may include one intra frame 531-a and multiple inter frames 531-b. For example, when the third value is 10 seconds, one GOP 531 may include one intra frame 531-a and 29 inter frames 531-b.

Assuming that a bandwidth that the electronic device 310 can use when performing a video call is the same, as an interval of a GOP increases, the size of frames included in the GOP may be increased. As the size of a frame increases, the quality of the frame may be improved. Therefore, as the interval of the GOP increases, the quality of a video call may be improved.

For example, the size (or quality) of the intra frame 521-a, 522-a, or 523-a included in the GOP 521, 522, or 523 having the second value may be higher than the size (or quality) of the intra frame 511-a, 512-a, 513-a, 514-a, or 515-a included in the GOP 511, 512, 513, 514, or 515 having the interval having the first value. The size (or quality) of the intra frame 531-a included in the GOP 531 having the third value may be higher than the size (or quality) of the intra frame 521-a, 522-a, or 523-a included in the GOP 521, 522, or 523 having the second value.

For example, the size (or quality) of the inter frames 521-b, 522-b, or 523-b included in the GOP 521, 522, or 523 having the second value may be higher than the size (or quality) of the inter frames 511-b, 512-b, 513-b, 514-b, or 515-b included in the GOP 511, 512, 513, 514, or 515 having the interval having the first value. The size (or quality) of the inter frames 531-b included in the GOP 531 having the third value may be higher than the size (or quality) of the inter frames 521-b, 522-b, or 523-b included in the GOP 521, 522, or 523 having the second value.

However, as the GOP interval increases, a reception period of an intra frame of the electronic device 310 may increase. As the reception period of the intra frame increases, the probability of an error occurring when decoding a GOP may increase. The electronic device 310 increases an interval of a GOP when at least one of a first retransmission function and/or a second retransmission function is activated, so that when receiving a request for retransmission of a packet, which is transmitted due to occurrence of an error in decoding of the GOP (the external electronic device 320 may identify whether an error has occurred before decoding a packet transmitted by the electronic device 310, based on information (e.g., sequence information and/or time stamp information of the packet) included in a header of the packet), the electronic device 310 may perform recovery by retransmitting the packet in which an error has occurred. In addition, when retransmission of a packet fails or a retransmission request is received late, the electronic device 310 can prevent a situation in which decoding of the external electronic device 320 fails, or prevent video quality from deteriorating, by generating (or encoding) a frame to be transmitted after a time point when the retransmission request is received as an intra frame, and transmitting the generated intra frame.

Therefore, the electronic device 310 may implement a high-quality video call using transmission (or reception) of a GOP having a relatively large interval, the first retransmission function, and/or the second retransmission function, in a state in which the first retransmit function and/or the second retransmit function is activated.

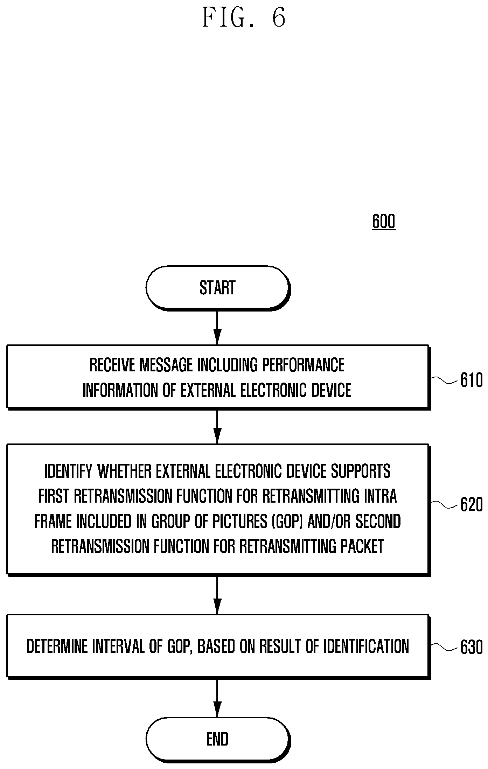

FIG. 6 is an operational flowchart illustrating an operation method of an electronic device according to various embodiments of the disclosure.

In operation 610, an electronic device (e.g., the electronic device 310 of FIG. 4) receives a message including performance information of an external electronic device (e.g., the external electronic device 320 of FIG. 3).

The electronic device 310 may receive the performance information of the external electronic device 320 participating in a video call. When the electronic device 310 receives the performance information of the external electronic device 320 in a process of performing negotiation for a video call, the performance information of the external electronic device 320 may be included in a response message (e.g., 200 OK) corresponding to an SDP invite message. The performance information of the external electronic device 320may be included in a message body field of the response message.

The electronic device 310 may receive the performance information of the external electronic device 320 even during a video call. The electronic device 310 may identify the performance information of the external electronic device 320 by parsing a specific field (e.g., an extension field) in a header portion of a real time protocol (RTP) packet transmitted by the external electronic device 320 during a video call.

The performance information of the external electronic device 320 may be transmitted or received by being included in a session description protocol security description (SDES) packet or an application (APP) packet among RTCP packets. A message transmitted by the external electronic device 320 may include the performance information of the external electronic device 320.

The electronic device 310 may identify the performance information of the external electronic device 320 by parsing a specific field (e.g., CNAME) in a header portion of a real-time transport control protocol (RTCP) packet including control information transmitted by the external electronic device 320 during a video call.

The performance information of the external electronic device 320 may include information indicating a function which can be supported by the external electronic device 320 among various functions defined in AVPF. Various functions supported by the AVPF may include at least one function related to improvement of the quality of a video call. A function for quality improvement defined in the AVPF may include a first retransmission function for performing retransmission of an intra frame and/or a second retransmission function for performing retransmission of a packet. The message including the performance information of the external electronic device 320 may include a specific field (e.g., a CNAME field) including an indicator indicating whether the function for quality improvement can be supported. The indicator may be implemented based on a string, and the electronic device 310 which has received a packet may identify whether the external electronic device 320 can support a specific function (e.g., the first retransmission function and/or second retransmission function), through parsing of the message.

The first retransmission function refers to a function for retransmitting a frame having failed to be transmitted among a group of pictures (GOP) including at least one intra frame and multiple inter frames (e.g., a P frame and/or a B frame) generated with reference to the intra frame. The first retransmission function may refer to one function among packet loss indication (PLI) or fast intra refresh (FIR). When a frame having failed to be transmitted is an inter frame, an intra frame corresponding to the frame having failed to be transmitted or a frame to be transmitted after the frame having failed to be transmitted may be generated (or encoded), and the converted frame may be retransmitted.

The second retransmission function refers to a function for retransmitting a packet having failed to be received among multiple packets constituting an intra frame and/or another frame (e.g., a P frame). The second retransmission function may refer to generic non-acknowledgement (NACK).

In operation 620, the electronic device 310 identifies whether the external electronic device 320 supports the first retransmission function for retransmitting an intra frame included in a group of pictures (GOP) and/or the second retransmission function for retransmitting a packet.

According to an embodiment, the electronic device 310 identifies whether the external electronic device 320 supports the first retransmission function and/or the second retransmission function, based on the performance information of the external electronic device 320 transmitted by the external electronic device 320.

The electronic device 310 may identify a first indicator indicating whether the first retransmission function is supported, and/or a second indicator indicating whether the second retransmission function is supported, the indicators being included in a specific field (e.g., CNAME) of a message transmitted by the external electronic device 320, and identify whether the external electronic device 320 supports the first retransmission function and/or the second retransmission function.

In operation 630, the electronic device 310 determines (or changes) an interval of the GOP, based on a result of the identification.

The electronic device 310 determines the interval of the GOP, based on the result of the identification. The electronic device 310 configures the GOP interval differently depending on whether the external electronic device 320 supports the first retransmission function and/or the second retransmission function.

The electronic device 310 configures the interval of the GOP as a first value, in response to identifying that the external electronic device 320 does not support both the first retransmission function and the second retransmission function (or, in response to the electronic device 310 performing a video call in a state in which both the first retransmission function and/or the second retransmission function are deactivated). When the external electronic device 320 does not support the first retransmission function and the second retransmission function, the quality of a video may be relatively reduced, and thus the quality of a video may be improved by configuring the interval of the GOP to be relatively small.

The electronic device 310 configures the interval of the GOP as a second value larger than the first value, in response to the external electronic device 320 supporting one of the first retransmission function and/or the second retransmission function (or, in response to the electronic device 310 activating one of the first retransmission function and/or the second retransmission function). When the external electronic device 320 supports one of the first retransmission function and the second retransmission function, the quality of a video may be relatively improved compared to a case where both the first retransmission function and the second retransmission function are not supported, and thus the GOP interval may be configured to be relatively large to increase the size of data which may be allocated to an intra frame included in the GOP, thereby improving the quality of a video.

The electronic device 310 may configure the interval of the GOP as a third value, in response to the external electronic device 320 supporting both the first retransmission function and/or the second retransmission function. According to an embodiment, the third value may be a value greater than the second value, or may be the same value as the second value. When the external electronic device 320 supports both the first retransmission function and the second retransmission function, the quality of a video may be relatively improved compared to a case where both the first retransmission function and the second retransmission function are not supported or a case where one of the first retransmission function and the second retransmission function is supported, and thus the GOP interval may be configured to be relatively larger to increase the size of data which may be allocated to an intra frame included in the GOP, thereby improving the quality of a video.

The electronic device 310 configures the interval of the GOP differently depending on the type of retransmission function supported by the external electronic device 320 among the first retransmission function and/or the second retransmission function. For example, when the external electronic device 320 supports the first retransmission function, the electronic device 310 may change the interval of the GOP to a fourth value greater than the first value. For another example, when the external electronic device 320 supports the second retransmission function, the electronic device 310 may change the interval of the GOP to a fifth value greater than the first value.

The electronic device 310 configures an encoder by using the determined GOP interval, and controls the encoder to encode input images based on the determined GOP interval.

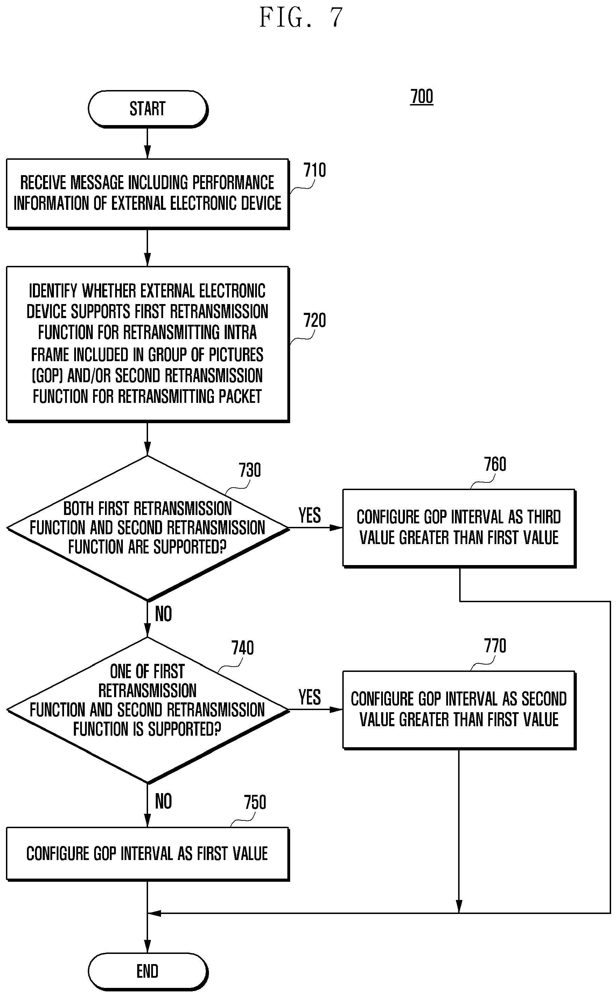

FIG. 7 illustrates an embodiment in which an electronic device according to various embodiments of the disclosure determines an interval of a GOP, based on whether an external electronic device supports a first retransmission function and/or a second retransmission function.

In operation 710, an electronic device (e.g., the electronic device 310 of FIG. 4) receives a message including performance information of an external electronic device (e.g., the external electronic device 320 of FIG. 3).

The electronic device 310 receives the performance information of the external electronic device 320 participating in a video call. When the electronic device 310 receives the performance information of the external electronic device 320 in a process of performing negotiation for a video call, the performance information of the external electronic device 320 may be included in a response message (e.g., 200 OK) corresponding to an SDP invite message. The performance information of the external electronic device 320 may be included in a message body field of the response message.

The electronic device 310 may receive the performance information of the external electronic device 320 even during a video call. The electronic device 310 may identify the performance information of the external electronic device 320 by parsing a specific field (e.g., an extension field) in a header portion of a real time protocol (RTP) packet transmitted by the external electronic device 320 during a video call.

The performance information of the external electronic device 320 may be transmitted or received by being included in a session description protocol security description (SDES) packet or an application (APP) packet among RTCP packets. A message transmitted by the external electronic device 320 may include the performance information of the external electronic device 320.

The electronic device 310 may identify the performance information of the external electronic device 320 by parsing a specific field (e.g., CNAME) in a header portion of a real-time transport control protocol (RTCP) packet including control information transmitted by the external electronic device 320 during a video call.

The performance information of the external electronic device 320 may include information indicating a function which can be supported by the external electronic device 320 among various functions defined in AVPF. Various functions supported by the AVPF may include at least one function related to improvement of the quality of a video call. A function for quality improvement defined in the AVPF may include a first retransmission function for performing retransmission of an intra frame and/or a second retransmission function for performing retransmission of a packet. The message including the performance information of the external electronic device 320 may include a specific field (e.g., a CNAME field) including an indicator indicating whether the function for quality improvement can be supported. The indicator may be implemented based on a string, and the electronic device 310 which has received a packet may identify whether the external electronic device 320 can support a specific function (e.g., the first retransmission function and/or second retransmission function), through parsing of the message.

The first retransmission function refers to a function for retransmitting a frame having failed to be transmitted among a group of pictures (GOP) including at least one intra frame and multiple inter frames (e.g., a P frame and/or a B frame) generated with reference to the intra frame. The first retransmission function may refer to one function among packet loss indication (PLI) or fast intra refresh (FIR). When a frame having failed to be transmitted is an inter frame, an intra frame corresponding to the frame having failed to be transmitted or a frame to be transmitted after the frame having failed to be transmitted may be generated (or encoded), and the converted frame may be retransmitted.

The second retransmission function refers to a function for retransmitting a packet having failed to be received among multiple packets constituting an intra frame and/or another frame (e.g., a P frame). The second retransmission function may refer to generic non-acknowledgement (NACK).

In operation 720, the electronic device 310 identifies whether the external electronic device 320 supports the first retransmission function for retransmitting an intra frame included in a group of pictures (GOP) and/or the second retransmission function for retransmitting a packet.

According to the claimed invention, the electronic device 310 identifies whether the external electronic device 320 supports the first retransmission function and/or the second retransmission function, based on the performance information of the external electronic device 320 transmitted by the external electronic device 320.

In operation 730, the electronic device 310 identifies whether the external electronic device 320 supports both the first retransmission function and the second retransmission function.

In operation 740, the electronic device 310 identifies whether the external electronic device 320 supports one of the first retransmission function and the second retransmission function, in response to that the external electronic device 320 does not support both the first retransmission function and the second retransmission function (operation 730-N).

In operation 750, the electronic device 310 configures a GOP interval as a first value, in response to that the external electronic device 320 does not support both the first retransmission function and the second retransmission function (operation 740-N).

As a part of preparing for a video call, the electronic device 310 may deactivate (or maintain a deactivated state) the first retransmission function and the second retransmission function, and configure an encoder to encode a GOP having an interval having the first value.

When the external electronic device 320 does not support the first retransmission function and the second retransmission function, the quality of a video may be relatively reduced, and thus the quality of a video may be improved by configuring the interval of the GOP to be relatively small.

In operation 760, the electronic device 310 may configure the GOP interval as a third value greater than the first value, in response to the external electronic device 320 supporting both the first retransmission function and the second retransmission function (operation 730-Y).

As a part of preparing for a video call, the electronic device 310 may activate the first retransmission function and the second retransmission function, and configure the encoder to encode a GOP having an interval having the third value.

When the external electronic device 320 supports both the first retransmission function and the second retransmission function, the quality of a video may be relatively improved compared to a case where both the first retransmission function and the second retransmission function are not supported or a case where one of the first retransmission function and the second retransmission function is supported, and thus the GOP interval may be configured to be relatively larger to increase the size of data which may be allocated to an intra frame included in the GOP, thereby improving the quality of a video.

In operation 770, the electronic device 310 configures the GOP interval as a second value greater than the first value, in response to the external electronic device 320 supporting one of the first retransmission function and the second retransmission function (operation 740-Y).

As a part of preparing for a video call, the electronic device 310 may activate a retransmission function supported by the external electronic device 320 among the first retransmission function and the second retransmission function, and configure the encoder to encode a GOP having an interval having the second value.

When the external electronic device 320 supports one of the first retransmission function and the second retransmission function, the quality of a video may be relatively improved compared to a case where both the first retransmission function and the second retransmission function are not supported, and thus the GOP interval may be configured to be relatively large to increase the size of data which may be allocated to an intra frame included in the GOP, thereby improving the quality of a video.

The electronic device 310 may configure the interval of the GOP differently depending on the type of retransmission function supported by the external electronic device 320 among the first retransmission function and/or the second retransmission function. For example, when the external electronic device 320 supports the first retransmission function, the electronic device 310 may change the interval of the GOP to a fourth value greater than the first value. For another example, when the external electronic device 320 supports the second retransmission function, the electronic device 310 may change the interval of the GOP to a fifth value greater than the first value.

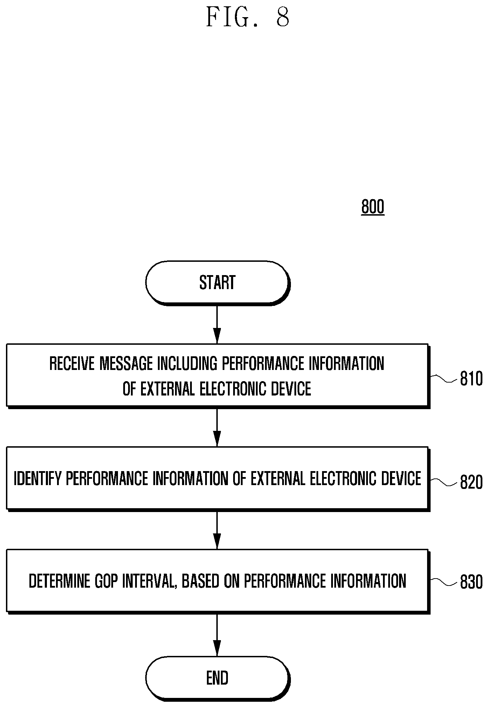

FIG. 8 illustrates an illustrative example not covered by the claimed invention, in which an electronic device determines an interval of a GOP, based on performance information of an external electronic device.

In operation 810, an electronic device (e.g., the electronic device 310 of FIG. 4) may receive a message including performance information of an external electronic device (e.g., the external electronic device 320 of FIG. 3).

The electronic device 310 may receive the performance information of the external electronic device 320 participating in a video call. When the electronic device 310 receives the performance information of the external electronic device 320 in a process of performing negotiation for a video call, the performance information of the external electronic device 320 may be included in a response message (e.g., 200 OK) corresponding to an SDP invite message. The performance information of the external electronic device 320may be included in a message body field of the response message.

The electronic device 310 may receive the performance information of the external electronic device 320 even during a video call. The electronic device 310 may identify the performance information of the external electronic device 320 by parsing a specific field (e.g., an extension field) in a header portion of a real time protocol (RTP) packet transmitted by the external electronic device 320 during a video call.

The performance information of the external electronic device 320 may be transmitted or received by being included in a session description protocol security description (SDES) packet or an application (APP) packet among RTCP packets. A message transmitted by the external electronic device 320 may include the performance information of the external electronic device 320.

The electronic device 310 may identify the performance information of the external electronic device 320 by parsing a specific field (e.g., CNAME) in a header portion of a real-time transport control protocol (RTCP) packet including control information transmitted by the external electronic device 320 during a video call.

The performance information of the external electronic device 320 may include information indicating whether the external electronic device 320 supports a function capable of performing post-processing after decoding a frame transmitted by the electronic device 310, and/or information indicating whether a function capable of performing post-processing has been activated.

In operation 820, the electronic device 310 may identify the performance information of the external electronic device 320.

The performance information of the external electronic device 320 may include information indicating a GOP interval determined by the external electronic device 320 or GOP intervals which can be supported by the external electronic device 320.

In operation 830, the electronic device 310 may determine a GOP interval, based on the performance information of the external electronic device 320.

According to an illustrative example, the electronic device 310 may determine the GOP interval to be the same size as the GOP interval determined by the external electronic device 320 included in the performance information of the external electronic device 320.

According to another illustrative example, the electronic device 310 may select one of GOP intervals supported by the external electronic device 320 included in the performance information of the external electronic device 320, and determine the selected size as the GOP interval.

According to an illustrative example, the electronic device 310 may identify whether the external electronic device 320 supports a function capable of performing post-processing, based on information indicating whether the external electronic device 320 supports a function capable of performing post-processing after decoding a frame transmitted by the electronic device 310, the information being included in the performance information of the external electronic device 320. According to the identification that the external electronic device 320 supports the function capable of performing post-processing, the electronic device 310 may relatively increase an interval of a GOP. The external electronic device 320 may perform post-processing of the decoded frame, based on a post-processing filter (e.g., a filter trained based on AI). The post-processed frame may have a relatively high quality, and thus the electronic device 310 may improve a compression rate by configuring the interval of the GOP to be large.

According to an illustrative example, the electronic device 310 may identify whether the external electronic device 320 has activated the function capable of performing post-processing, based on information indicating whether the external electronic device 320 has activated the function capable of performing post-processing after decoding a frame transmitted by the electronic device 310, the information being included in the performance information of the external electronic device 320. According to the identification that the external electronic device 320 has activated the function capable of performing post-processing, the electronic device 310 may relatively increase the interval of the GOP. The external electronic device 320 may perform post-processing of the decoded frame, based on a post-processing filter (e.g., a filter trained based on AI). The post-processed frame may have a relatively high quality, and thus the electronic device 310 may improve a compression rate by configuring the interval of the GOP to be large.

An electronic device according to various embodiments of the disclosure may include: a communication circuit configured to perform a video call with an external electronic device; and a processor, wherein the processor is configured to: receive, from the external electronic device, a message including performance information of the external electronic device; identify, based on the performance information of the external electronic device, whether the external electronic device supports a first retransmission function for retransmitting an intra frame corresponding to a frame having failed to be transmitted among frames included in a group of pictures (GOP), and/or a second retransmission function for retransmitting a packet to be transmitted through the video call; and determine an interval of the GOP, based on a result of the identification.

In the electronic device according to various embodiments of the disclosure, the message may be a message included in a source description (SDES) packet of a real-time transport control protocol (RTCP), an application (APP) packet of the RTCP, and/or a real-time protocol (RTP) packet.

In the electronic device according to various embodiments of the disclosure, in the packet, a first indicator indicating whether the first retransmission function is supported and/or a second indicator indicating whether the second retransmission function is supported may be configured in a canonical name (CNAME) of the packet.

In the electronic device according to various embodiments of the disclosure, the processor is configured to configure the interval as a first value when the external electronic device does not support both the first retransmission function and the second retransmission function, and configure the interval as a second value greater than the first value when the external electronic device supports at least one of the first retransmission function and/or the second retransmission function.

In the electronic device according to various embodiments of the disclosure, the processor may be configured to configure the interval as a third value greater than the second value when the external electronic device supports both the first retransmission function and the second retransmission function.

In the electronic device according to various embodiments of the disclosure, the processor may be configured to receive the message from the external electronic device as a part of a negotiation process for a video call which does not support AVPF.

In the electronic device according to various embodiments of the disclosure, the processor may be configured to receive the message during the video call, and change the interval of the GOP, based on the result of the identification.

In the electronic device according to various embodiments of the disclosure, the processor may be configured to, as a part of the changing of the interval of the GOP, reconfigure an encoder configured to encode at least one frame included in the GOP.

In the electronic device according to various embodiments of the disclosure, the processor may be configured to determine whether to activate the first retransmission function and/or the second retransmission function, based on the result of the identification.

In the electronic device according to various embodiments of the disclosure, the first retransmission function may be one of a packet loss indicator (PLI) function and a fast intra refresh (FIR) function defined in AVPF, and the second retransmission function may be a generic NACK function defined in the AVPF.

An operation method of an electronic device according to various embodiments of the disclosure may include: receiving, from an external electronic device which is to perform a video call with the electronic device, a message including performance information of the external electronic device; identifying, based on the performance information of the external electronic device, whether the external electronic device supports a first retransmission function for retransmitting an intra frame corresponding to a frame having failed to be transmitted among frames included in a group of pictures (GOP), and/or a second retransmission function for retransmitting a packet to be transmitted through the video call; and determining an interval of the GOP, based on a result of the identification.

In the operation method of the electronic device according to various embodiments of the disclosure, the message may be a message included in a source description (SDES) packet of a real-time transport control protocol (RTCP), an application (APP) packet of the RTCP, and/or a real-time protocol (RTP) packet.

In the operation method of the electronic device according to various embodiments of the disclosure, in the packet, a first indicator indicating whether the first retransmission function is supported and/or a second indicator indicating whether the second retransmission function is supported may be configured in a canonical name (CNAME) of the packet.

In the operation method of the electronic device according to various embodiments of the disclosure, the determining of the interval of the GOP includes: configuring the interval as a first value when the external electronic device does not support both the first retransmission function and the second retransmission function; or configuring the interval as a second value greater than the first value when the external electronic device supports at least one of the first retransmission function and/or the second retransmission function.

In the operation method of the electronic device according to various embodiments of the disclosure, the determining of the interval of the GOP may further include configuring the interval as a third value greater than the second value when the external electronic device supports both the first retransmission function and the second retransmission function.

In the operation method of the electronic device according to various embodiments of the disclosure, the receiving of the message may include receiving the message from the external electronic device as a part of a negotiation process for a video call which does not support AVPF.

The operation method of the electronic device according to various embodiments of the disclosure may further include: receiving the message during the video call; and changing the interval of the GOP, based on the result of the identification.

The operation method of the electronic device according to various embodiments of the disclosure may further include, as a part of the changing of the interval of the GOP, reconfiguring an encoder configured to encode at least one frame included in the GOP.

The operation method of the electronic device according to various embodiments of the disclosure may further include determining whether to activate the first retransmission function and/or the second retransmission function, based on the result of the identification.

In the operation method of the electronic device according to various embodiments of the disclosure, the first retransmission function may be one of a packet loss indicator (PLI) function and a fast intra refresh (FIR) function defined in AVPF, and the second retransmission function may be a generic NACK function defined in the AVPF.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 310) for transmitting groups of pictures, GOPs, each GOP (510, 511, 512, 513, 514, 515, 520, 521, 522, 530, 531) including an intra frame and a plurality of inter frames, comprising:
a communication circuit (430) configured to perform a video call with an external electronic device (102, 104, 320); and
a processor (120, 420),
wherein the processor (120, 420) is configured to:
receive (610, 710), from the external electronic device (102, 104, 320), a message including performance information of the external electronic device (102, 104, 320);
identify (620, 720), based on the performance information of the external electronic device (102, 104, 320), whether the external electronic device (102, 104, 320) supports a first retransmission function for retransmitting an intra frame (511-a, 512-a, 513-a, 514-a, 515-a, 521-a, 522-a, 531-a) corresponding to a frame having failed to be transmitted among frames included in a group of pictures, GOP, (510, 511, 512, 513, 514, 515, 520, 521, 522, 530, 531), and/or a second retransmission function for retransmitting a packet to be transmitted through the video call;
set (630) a GOP interval of the GOPs (510, 511, 512, 513, 514, 515, 520, 521, 522, 530, 531) as a first value in case that the external electronic device (102, 104, 320) supports neither the first retransmission function nor the second retransmission function;
set (630) the GOP interval of the GOPs
as a second value being greater than the first value in case that the external electronic device (102, 104, 320) supports at least one of the first retransmission function and/or the second retransmission function;
configure an encoder by using the set GOP interval, and
control the encoder to encode input images based on the set GOP interval.

2. The electronic device (101, 310) of claim 1, wherein the message is a message included in a source description, SDES, packet of a real-time transport control protocol, RTCP, an application, APP, packet of the RTCP, and/or a real-time protocol, RTP, packet.

3. The electronic device (101, 310) of claim 2, wherein, in the packet, a first indicator indicating whether the first retransmission function is supported and/or a second indicator indicating whether the second retransmission function is supported are configured in a canonical name, CNAME, of the packet.

4. The electronic device (101, 310) of claim 1, wherein the processor (120, 420) is configured to configure (760) the GOP interval as a third value greater than the second value in case that the external electronic device (102, 104, 320) supports both the first retransmission function and the second retransmission function.

5. The electronic device (101, 310) of any of the preceding claims, wherein the processor (120, 420) is configured to receive the message from the external electronic device (102, 104, 320) as a part of a negotiation process for a video call which does not support AVPF.

6. The electronic device (101, 310) of any of the preceding claims, wherein the processor (120, 420) is configured to:
receive the message during the video call; and
change the GOP interval of the GOPs (510, 511, 512, 513, 514, 515, 520, 521, 522, 530, 531), based on the result of the identification.

7. The electronic device (101, 310) of claim 6, wherein the processor (120, 420) is configured to, as a part of the changing of the GOP interval of the GOPs (510, 511, 512, 513, 514, 515, 520, 521, 522, 530, 531), reconfigure the encoder configured to encode at least one frame included in the GOPs (510, 511, 512, 513, 514, 515, 520, 521, 522, 530, 531).

8. The electronic device (101, 310) of any of the preceding claims, wherein the processor (120, 420) is configured to determine whether to activate the first retransmission function and/or the second retransmission function, based on the result of the identification.

9. The electronic device (101, 310) of any of the preceding claims, wherein the first retransmission function is one of a packet loss indicator, PLI, function and a fast intra refresh, FIR, function defined in AVPF, and the second retransmission function is a generic NACK function defined in the AVPF.

10. An operation method of an electronic device (101, 310) for transmitting groups of pictures, GOPs, each GOP (510, 511, 512, 513, 514, 515, 520, 521, 522, 530, 531) including an intra frame and a plurality of inter frames, the method comprising:
receiving (610, 710), from an external electronic device (102, 104, 320) which is to perform a video call with the electronic device (101, 310), a message including performance information of the external electronic device (102, 104, 320);
identifying (620, 720), based on the performance information of the external electronic device (102, 104, 320), whether the external electronic device (102, 104, 320) supports a first retransmission function for retransmitting an intra frame (511-a, 512-a, 513-a, 514-a, 515-a, 521-a, 522-a, 531-a) corresponding to a frame having failed to be transmitted among frames included in a group of pictures, GOP, (510, 511, 512, 513, 514, 515, 520, 521, 522, 530, 531), and/or a second retransmission function for retransmitting a packet to be transmitted through the video call;
setting (630) a GOP interval of the GOPs (510, 511, 512, 513, 514, 515, 520, 521, 522, 530, 531) as a first value in case that the external electronic device (102, 104, 320) supports neither the first retransmission function nor the second retransmission function;
setting (630) the GOP interval of the GOPs as a second value being greater than the first value in case that the external electronic device (102, 104, 320) supports at least one of the first retransmission function and/or the second retransmission function,
configuring an encoder by using the set GOP interval, and
controlling the encoder to encode input images based on the set GOP interval.

11. The method of claim 10, wherein the message is a message included in a source description, SDES, packet of a real-time transport control protocol, RTCP, an application, APP, packet of the RTCP, and/or a real-time protocol, RTP, packet.

12. The method of claim 11, wherein, in the packet, a first indicator indicating whether the first retransmission function is supported and/or a second indicator indicating whether the second retransmission function is supported are configured in a canonical name, CNAME, of the packet.

13. The method of claim 10, wherein the determining of the GOP interval of the GOPs (510, 511, 512, 513, 514, 515, 520, 521, 522, 530, 531) further comprises configuring (760) the GOP interval as a third value greater than the second value in case that the external electronic device (102, 104, 320) supports both the first retransmission function and the second retransmission function.

## Patentansprüche

1. Elektronische Vorrichtung (101, 310) zum Übertragen von Bildergruppen, GOPs, wobei jede GOP (510, 511, 512, 513, 514, 515, 520, 521, 522, 530, 531) ein Intra-Frame und eine Vielzahl von Inter-Frames beinhaltet, Folgendes umfassend:
eine Kommunikationsschaltung (430), die konfiguriert ist, um einen Videoanruf mit einer externen elektronischen Vorrichtung (102, 104, 320) durchzuführen; und
einen Prozessor (120, 420),
wobei der Prozessor (120, 420) konfiguriert ist zum:
Empfangen (610, 710), von der externen elektronischen Vorrichtung (102, 104, 320), einer Nachricht, die Leistungsinformationen der externen elektronischen Vorrichtung (102, 104, 320) beinhaltet;
Identifizieren (620, 720), basierend auf den Leistungsinformationen der externen elektronischen Vorrichtung (102, 104, 320), ob die externe elektronische Vorrichtung (102, 104, 320) eine erste Neuübertragungsfunktion für die Neuübertragung eines Intra-Frames (511-a, 512-a, 513-a, 514-a, 515-a, 521-a, 522-a, 531-a), der einem Frame entspricht, dessen Übertragung fehlgeschlagen ist, unter den in einer Bildergruppe, GOP, (510, 511, 512, 513, 514, 515, 520, 521, 522, 530, 531) enthaltenen Frames, und/oder eine zweite Neuübertragungsfunktion zum Neuübertragen eines Pakets, das über den Videoanruf übertragen werden soll, unterstützt;
Festlegen (630) eines GOP-Intervalls der GOPs (510, 511, 512, 513, 514, 515, 520, 521, 522, 530, 531) als einen ersten Wert, falls die externe elektronische Vorrichtung (102, 104, 320) weder die erste Neuübertragungsfunktion noch die zweite Neuübertragungsfunktion unterstützt;
Festlegen (630) des GOP-Intervalls der GOPs als einen zweiten Wert, der größer ist als der erste Wert, falls die externe elektronische Vorrichtung (102, 104, 320) mindestens eine der ersten Neuübertragungsfunktion und/oder der zweiten Neuübertragungsfunktion unterstützt;
Konfigurieren eines Codierers mithilfe des festgelegten GOP-Intervalls, und
Steuern des Codierers, sodass Eingabebilder basierend auf dem festgelegten GOP-Intervall codiert werden.

2. Elektronische Vorrichtung (101, 310) nach Anspruch 1, wobei die Nachricht eine Nachricht ist, die in einem Paket zur Quellenbeschreibung, SDES, eines Echtzeit-Transportsteuerungsprotokolls, RTCP, einem Anwendungs-, APP-,Paket des RTCP, und/oder einem Paket eines Echtzeitprotokolls, RTP, enthalten ist.

3. Elektronische Vorrichtung (101, 310) nach Anspruch 2, wobei in dem Paket ein erster Indikator, der angibt, ob die erste Neuübertragungsfunktion unterstützt wird, und/oder ein zweiter Indikator, der angibt, ob die zweite Neuübertragungsfunktion unterstützt wird, in einem kanonischen Namen, CNAME, des Pakets konfiguriert sind.

4. Elektronische Vorrichtung (101, 310) nach Anspruch 1, wobei der Prozessor (120, 420) so konfiguriert ist, dass er das GOP-Intervall als einen dritten Wert konfiguriert (760), der größer ist als der zweite Wert, falls die externe elektronische Vorrichtung (102, 104, 320) sowohl die erste Neuübertragungsfunktion als auch die zweite Neuübertragungsfunktion unterstützt.

5. Elektronische Vorrichtung (101, 310) nach einem der vorhergehenden Ansprüche, wobei der Prozessor (120, 420) so konfiguriert ist, dass er die Nachricht von der externen elektronischen Vorrichtung (102, 104, 320) als Teil eines Verhandlungsprozesses für einen Videoanruf empfängt, der AVPF nicht unterstützt.

6. Elektronische Vorrichtung (101, 310) nach einem der vorhergehenden Ansprüche, wobei der Prozessor (120, 420) konfiguriert ist zum:
Empfangen der Nachricht während des Videoanrufs; und
Ändern des GOP-Intervalls der GOPs (510, 511, 512, 513, 514, 515, 520, 521, 522, 530, 531) basierend auf dem Ergebnis der Identifizierung.

7. Elektronische Vorrichtung (101, 310) nach Anspruch 6, wobei der Prozessor (120, 420) konfiguriert ist, um als Teil des Änderns des GOP-Intervalls der GOPs (510, 511, 512, 513, 514, 515, 520, 521, 522, 530, 531) den Codierer, der konfiguriert ist, um mindestens einen in den GOPs (510, 511, 512, 513, 514, 515, 520, 521, 522, 530, 531) enthaltenen Frame zu codieren, neu zu konfigurieren.

8. Elektronische Vorrichtung (101, 310) nach einem der vorhergehenden Ansprüche, wobei der Prozessor (120, 420) so konfiguriert ist, dass er basierend auf dem Ergebnis der Identifizierung bestimmt, ob die erste Neuübertragungsfunktion und/oder die zweite Neuübertragungsfunktion aktiviert werden soll.

9. Elektronische Vorrichtung (101, 310) nach einem der vorhergehenden Ansprüche, wobei die erste Neuübertragungsfunktion eine von einer Paketverlustanzeige-, PLI-,Funktion und einer schnellen Intra-Auffrischungs-, FIR-,Funktion, definiert im AVPF, ist, und die zweite Neuübertragungsfunktion eine im AVPF definierte generische NACK-Funktion ist.

10. Betriebsverfahren einer elektronischen Vorrichtung (101, 310) zum Übertragen von Bildergruppen, GOPs, wobei jede GOP (510, 511, 512, 513, 514, 515, 520, 521, 522, 530, 531) ein Intra-Frame und eine Vielzahl von Inter-Frames beinhaltet, wobei das Verfahren umfasst:
Empfangen (610, 710) einer Nachricht, die Leistungsinformationen der externen elektronischen Vorrichtung (102, 104, 320) umfasst, von einer externen elektronischen Vorrichtung (102, 104, 320), die einen Videoanruf mit der elektronischen Vorrichtung (101, 310) durchführen soll;
Identifizieren (620, 720), basierend auf den Leistungsinformationen der externen elektronischen Vorrichtung (102, 104, 320), ob die externe elektronische Vorrichtung (102, 104, 320) eine erste Neuübertragungsfunktion für die Neuübertragung eines Intra-Frames (511-a, 512-a, 513-a, 514-a, 515-a, 521-a, 522-a, 531-a), der einem Frame entspricht, dessen Übertragung fehlgeschlagen ist, unter den in einer Bildergruppe, GOP, (510, 511, 512, 513, 514, 515, 520, 521, 522, 530, 531) enthaltenen Frames, und/oder eine zweite Neuübertragungsfunktion zum Neuübertragen eines Pakets, das über den Videoanruf übertragen werden soll, unterstützt;
Festlegen (630) eines GOP-Intervalls der GOPs (510, 511, 512, 513, 514, 515, 520, 521, 522, 530, 531) als einen ersten Wert, falls die externe elektronische Vorrichtung (102, 104, 320) weder die erste Neuübertragungsfunktion noch die zweite Neuübertragungsfunktion unterstützt;
Festlegen (630) des GOP-Intervalls der GOPs als einen zweiten Wert, der größer ist als der erste Wert, falls die externe elektronische Vorrichtung (102, 104, 320) mindestens eine der ersten Neuübertragungsfunktion und/oder der zweiten Neuübertragungsfunktion unterstützt,
Konfigurieren eines Codierers mithilfe des festgelegten GOP-Intervalls, und
Steuern des Codierers, sodass Eingabebilder basierend auf dem festgelegten GOP-Intervall codiert werden.

11. Verfahren nach Anspruch 10, wobei die Nachricht eine Nachricht ist, die in einem Paket zur Quellenbeschreibung, SDES, eines Echtzeit-Transportsteuerungsprotokolls, RTCP, einem Anwendungs-, APP-,Paket des RTCP, und/oder einem Paket eines Echtzeitprotokolls, RTP, enthalten ist.

12. Verfahren nach Anspruch 11, wobei in dem Paket ein erster Indikator, der angibt, ob die erste Neuübertragungsfunktion unterstützt wird, und/oder ein zweiter Indikator, der angibt, ob die zweite Neuübertragungsfunktion unterstützt wird, in einem kanonischen Namen, CNAME, des Pakets konfiguriert sind.

13. Verfahren nach Anspruch 10, wobei das Bestimmen des GOP-Intervalls der GOPs (510, 511, 512, 513, 514, 515, 520, 521, 522, 530, 531) ferner das Konfigurieren (760) des GOP-Intervalls als einen dritten Wert umfasst, der größer ist als der zweite Wert, falls die externe elektronische Vorrichtung (102, 104, 320) sowohl die erste Neuübertragungsfunktion als auch die zweite Neuübertragungsfunktion unterstützt.

## Revendications

1. Dispositif électronique (101, 310) pour transmettre des groupes d'images, GOPs, chaque GOP (510, 511, 512, 513, 514, 515, 520, 521, 522, 530, 531) comprenant une image intra et une pluralité d'images inter, comprenant :
un circuit de communication (430) configuré pour établir un appel vidéo avec un dispositif électronique externe (102, 104, 320) ; et
un processeur (120, 420),
dans lequel le processeur (120, 420) est configuré pour :
recevoir (610, 710), depuis le dispositif électronique externe (102, 104, 320), un message comprenant des informations de performance du dispositif électronique externe (102, 104, 320) ;
déterminer (620, 720), en se basant sur les informations de performance du dispositif électronique externe (102, 104, 320), si le dispositif électronique externe (102, 104, 320) prend en charge une première fonction de retransmission permettant de retransmettre une image intra (511-a, 512-a, 513-a, 514-a, 515-a, 521-a, 522-a, 531-a) correspondant à une image dont la transmission a échoué parmi les images comprises dans un groupe d'images, GOP, (510, 511, 512, 513, 514, 515, 520, 521, 522, 530, 531), et/ou une deuxième fonction de retransmission permettant de retransmettre un paquet devant être transmis via l'appel vidéo ;
définir (630) un intervalle GOP parmi les GOPs (510, 511, 512, 513, 514, 515, 520, 521, 522, 530, 531) comme une première valeur dans le cas où le dispositif électronique externe (102, 104, 320) ne prend en charge ni la première fonction de retransmission ni la deuxième fonction de retransmission ;
définir (630) l'intervalle GOP des GOPs comme une deuxième valeur supérieure à la première valeur dans le cas où le dispositif électronique externe (102, 104, 320) prend en charge au moins une de la première fonction de retransmission et/ou de la deuxième fonction de retransmission ;
configurer un encodeur en utilisant l'intervalle GOP défini, et
commander l'encodeur afin qu'il encode les images d'entrée en se basant sur l'intervalle GOP défini.

2. Dispositif électronique (101, 310) de la revendication 1, dans lequel le message est un message inclus dans un paquet de description de source, SDES, d'un protocole de commande de transport en temps réel, RTCP, dans un paquet d'application, APP, du RTCP et/ou dans un paquet de protocole en temps réel, RTP.

3. Dispositif électronique (101, 310) de la revendication 2, dans lequel, dans le paquet, un premier indicateur indiquant si la première fonction de retransmission est prise en charge et/ou un deuxième indicateur indiquant si la deuxième fonction de retransmission est prise en charge sont configurés dans un nom canonique, CNAME, du paquet.

4. Dispositif électronique (101, 310) de la revendication 1, dans lequel le processeur (120, 420) est configuré pour configurer (760) l'intervalle GOP comme une troisième valeur supérieure à la deuxième valeur dans le cas où le dispositif électronique externe (102, 104, 320) prend en charge à la fois la première fonction de retransmission et la deuxième fonction de retransmission.

5. Dispositif électronique (101, 310) de l'une quelconque des revendications précédentes, dans lequel le processeur (120, 420) est configuré pour recevoir le message provenant du dispositif électronique externe (102, 104, 320) dans le cadre d'un processus de négociation pour un appel vidéo qui ne prend pas en charge l'AVPF.

6. Dispositif électronique (101, 310) de l'une quelconque des revendications précédentes, dans lequel le processeur (120, 420) est configuré pour :
recevoir le message pendant l'appel vidéo ; et
modifier l'intervalle GOP des GOPs (510, 511, 512, 513, 514, 515, 520, 521, 522, 530, 531), en se basant sur le résultat de l'identification.

7. Dispositif électronique (101, 310) de la revendication 6, dans lequel le processeur (120, 420) est configuré pour, dans le cadre de la modification de l'intervalle des GOPs (510, 511, 512, 513, 514, 515, 520, 521, 522, 530, 531), reconfigurer l'encodeur configuré pour encoder au moins une image incluse dans les GOPs (510, 511, 512, 513, 514, 515, 520, 521, 522, 530, 531).

8. Dispositif électronique (101, 310) de l'une quelconque des revendications précédentes, dans lequel le processeur (120, 420) est configuré pour déterminer s'il convient d'activer la première fonction de retransmission et/ou la deuxième fonction de retransmission, en se basant sur le résultat de l'identification.

9. Dispositif électronique (101, 310) de l'une quelconque des revendications précédentes, dans lequel la première fonction de retransmission est l'une d'une fonction d'indicateur de perte de paquets, PLI, et d'une fonction de rafraîchissement intra rapide, FIR, définies dans l'AVPF, et la deuxième fonction de retransmission est une fonction NACK générique définie dans l'AVPF.

10. Procédé de fonctionnement d'un dispositif électronique (101, 310) pour transmettre des groupes d'images, GOPs, chaque GOP (510, 511, 512, 513, 514, 515, 520, 521, 522, 530, 531) comprenant une image intra et une pluralité d'images inter, le procédé comprenant :
recevoir (610, 710), depuis un dispositif électronique externe (102, 104, 320) destiné à établir un appel vidéo avec le dispositif électronique (101, 310), un message comprenant des informations de performance du dispositif électronique externe (102, 104, 320) ;
déterminer (620, 720), en se basant sur les informations de performance du dispositif électronique externe (102, 104, 320), si le dispositif électronique externe (102, 104, 320) prend en charge une première fonction de retransmission permettant de retransmettre une image intra (511-a, 512-a, 513-a, 514-a, 515-a, 521-a, 522-a, 531-a) correspondant à une image dont la transmission a échoué parmi les images comprises dans un groupe d'images, GOP, (510, 511, 512, 513, 514, 515, 520, 521, 522, 530, 531), et/ou une deuxième fonction de retransmission permettant de retransmettre un paquet devant être transmis via l'appel vidéo ;
définir (630) un intervalle GOP parmi les GOPs (510, 511, 512, 513, 514, 515, 520, 521, 522, 530, 531) comme une première valeur dans le cas où le dispositif électronique externe (102, 104, 320) ne prend en charge ni la première fonction de retransmission ni la deuxième fonction de retransmission ;
définir (630) l'intervalle GOP des GOPs comme une deuxième valeur supérieure à la première valeur dans le cas où le dispositif électronique externe (102, 104, 320) prend en charge au moins une de la première fonction de retransmission et/ou de la deuxième fonction de retransmission,
configurer un encodeur en utilisant l'intervalle GOP défini, et
commander l'encodeur afin qu'il encode les images d'entrée en se basant sur l'intervalle GOP défini.

11. Procédé de la revendication 10, dans lequel le message est un message inclus dans un paquet de description de source, SDES, d'un protocole de commande de transport en temps réel, RTCP, dans un paquet d'application, APP, du RTCP et/ou dans un paquet de protocole en temps réel, RTP.

12. Procédé de la revendication 11, dans lequel, dans le paquet, un premier indicateur indiquant si la première fonction de retransmission est prise en charge et/ou un deuxième indicateur indiquant si la deuxième fonction de retransmission est prise en charge sont configurés dans un nom canonique, CNAME, du paquet.

13. Procédé de la revendication 10, dans lequel la détermination de l'intervalle GOP des GOPs (510, 511, 512, 513, 514, 515, 520, 521, 522, 530, 531) comprend en outre la configuration (760) de l'intervalle de GOP comme une troisième valeur supérieure à la deuxième valeur dans le cas où le dispositif électronique externe (102, 104, 320) prend en charge à la fois la première fonction de retransmission et la deuxième fonction de retransmission.
